# EUROPEAN PATENT APPLICATION

(11) **EP 0 978 953 A1**
(43) Date of publication of application: **09.02.2000**
(21) Application number: 98306233.2
(22) Date of filing: 04.08.1998
(51) Int. Cl.: H04B 7/185

(54) **Regional limitation for satellite communications**

(71) Applicant: ICO Services Ltd., London W6 9BN (GB)
(72) Inventor: Grayson, Mark, Chiswick, London W4 2QT (GB)
(74) Representative: Read, Matthew Charles

(57) **Abstract**

In a satellite communications environment, where a user terminal 44 can contact a ground segment 38 via a satellite 10 to establish communications, the ground segment 38 indicates, via its broadcast channel (BCCH) regions 96 96' of limitation to operations of the user terminal 44 and indicates the nature of the limitation. The user terminal 44 determines if its actual position 98 98' is within a region 96 96' and complies with the limitation is it is within a region 96 96'. Limitation varies from cessation of all operation right down to elimination of minor housekeeping activities.

## Description

The present invention relates to satellite communications systems where one or more satellites, in orbit about the earth, provide a communications link between a plurality of user terminals, on the surface of the earth, and a ground segment, the ground segment being operative to relay communications between a user terminal and another user terminal, or other communications terminals on the earth.

Communications satellites provide all or part of the surface of the earth with radio coverage. User terminals, not dissimilar to a cellular telephone handset, can send and receive communications and control signals to and from a satellite. These signals, in turn, originate from or are sent to a ground segment comprising a satellite earth station and connection means to the terrestrial telecommunications system. The user terminal can thus establish communications with another user terminal via the ground segment, or can conduct communications with any telephone within the reach of the terrestrial communications system, within the reach of the ground station.

Although the satellite provides an indiscriminate radio coverage, within which a user terminal can be used, it is often the case that user terminal access must be limited, dependently upon where, on the surface of the earth, the user terminal is located.

In a first instance, it may be that the fiscal agreement between the provider of satellite communications and the user grants a first rate of call charging or access when close to a home city, but a higher rate of call charging or access when the user the user is far away.

In a second instance, political realities or regional contractual prohibitions may mean that the user is prohibited from access when in a certain area.

In a third instance, too many calls may be received from a particular area or region, creating a temporary jam (congestion). Users may be required to forego access until the condition is cleared.

In another instance, an emergency situation in a region may make it expedient to limit non-emergency traffic to and from that region.

In another instance, interference with radio astronomical or military radio equipment may require the user to remain silent in certain regions.

The indiscriminate coverage of the satellite creates a problem. It is customary to divide the radio coverage of a satellite into an abutting plurality of spot beams. Even so, the diameter of an individual spot beam is so large that restriction of coverage in a whole spot beam would involve an unwarrantedly large area.

It is not enough simply to switch off a spot beam, since user terminals, deprived of contact with the satellite, may commence to transmit to re-establish or maintain their link thereto.

The present invention seeks to provide a way to control the spontaneous or user initiated behaviour of user terminals when within a restricted area.

According to a first aspect, the present invention consists in a satellite communications system comprising a user terminal and a ground segment in communications with said user terminal via a communications satellite, said system being operative to measure the position, on the surface of the earth, of said user terminal, said system being operative to determine if said measured position is within a region of the surface of the earth wherefrom operation is limited, and said user terminal and said ground system being co-operative to limit operation of said user terminal if said user terminal is within said region.

According to a second aspect, the present invention consists in a user terminal for user in a satellite communications system comprising said user terminal and a ground segment in communications with said user terminal via a communications satellite, said system being operative to measure the position, on the surface of the earth, of said user terminal, said system being operative to determine if said measured position is within a region of the surface of the earth wherefrom operation is limited, and said user terminal and said ground segment being co-operative to limit operation of said user terminal if said user terminal is within said region.

According to a third aspect, the present invention consists in a method for use in a satellite communications system comprising a user terminal and a ground segment in communications with said user terminal via a communications satellite, said method comprising the steps of: said system measuring the position, on the surface of the earth, of said user terminal; said system determining if said measured position is within a region of the surface of the earth wherefrom operation is limited; and said user terminal and said ground segment co-operating to limit operation of said user terminal during the time that said user terminal is within said region.

The various aspects further provide that the ground segment is operative to indicate the region by communicating to the user terminal the location on the surface of the earth of the user terminal, the location of a point on the surface of the earth and the radius of a circle having the point as its centre, the user terminal being responsive thereto to calculate if the user terminal is within the circle and to limit operation if the user terminal is within the circle.

The various aspects also provide that the satellite is one of a plurality of satellites, that each of said plurality of satellites provides a plurality of spot beams to provide radio coverage on the surface of the earth, and that each spot beam provides a broadcast message for reception by the user terminal, the user terminal being operative to receive the broadcast message from all spot beams the user terminal can, at any instant, receive, and the user terminal being operative to attempt unlimited operation with any receivable spot beam which does not provide, in its broadcast message, indication of a region of limited operation wherein said user terminal is located.
The various aspects further provide that the ground segment is operative to communicate to the user terminal a timer value. the user terminal being responsive thereto to start a timer and to limit operation until the timer value has elapsed.

The various aspects also provide that the user terminal comprises independent means for determining the position of the user terminal on the surface of the earth, the user terminal imposing the limit to operation until said user terminal has moved outside said region.

The various aspects of the invention further provide that the ground segment is operative to define the region by indicating to the user terminal the co-ordinates, on the surface of the earth, of a polygon, the region being defined by the sides of the polygon.

The various aspects of the invention further provide that the limit to operation includes a prohibition from any operation by the user terminal.

The various aspects of the invention further provide that the limit to operation includes a prohibition from location updating by the user terminal. In the preferred embodiment, it is the preference that this prohibition should not include a prohibition from initiating an emergency call, though the present invention envisages situations where even this basic service may be unacceptable.

The various aspects of the invention, yet further, provide that the limit to operation includes a prohibition from registration, by the user terminal, with said ground segment.

The various aspects of the invention, yet further, provide that the limit to operation includes a prohibition on said user terminal from initiating a call.

The various aspects of the invention, still further, provide that the ground segment is operative to communicate to the user terminal the nature of the limit to operation and the user terminal is responsive thereto to impose on itself the indicated limit.

These, and other advantages and features of the present invention, will be explained by the following description, in conjunction with the appended drawings, in which:

Figure 1 shows an exemplary array of communications satellites in orbit about the earth.

Figure 2 shows how a plurality of orbits combine to cover the entire earth.

Figure 3 shows how each satellite of figures 1 and 3 provides an array of spot beams on the surface of the earth.

Figure 4 shows the manner in which a user terminal communicates with the ground segment via a satellite.

Figure 5 is a flowchart of the activities of the ground segment of figure 4 when practising the present invention.

Figure 6 is a flowchart of the activities of the user terminal of figure 4 when practising the present invention.

Figure 7 is illustrative of a first manner of definition of an area of limitation of service.
and

Figure 8 is illustrative of a second manner of definition of an area of limitation of service.

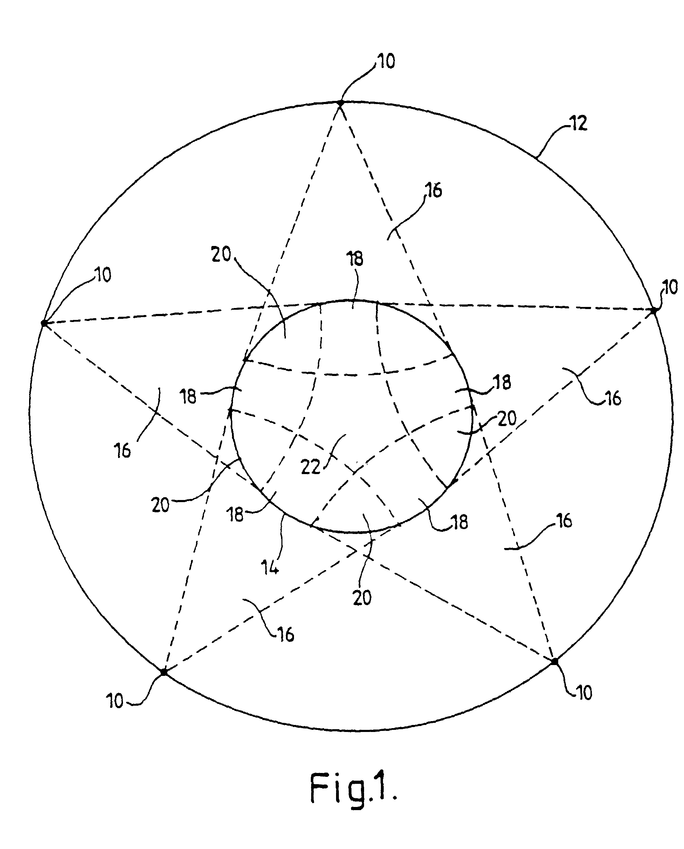

Figure 1 shows a planar constellation of communications satellites disposed about the earth.

The plurality of communications satellites 10 are evenly disposed around a circular orbit 12 above the surface of the earth 14. Each of the communications satellites 10 is designed to provide radio communications with apparatus on the surface to the earth 14 when the individual communications satellite 10 is more than 10 degrees above the horizon. Each communications satellite 10 therefore provides a cone 16 of radio coverage which intersects with the surface of the earth 14.

The surface of the earth has three types of areas. A first type of area 18 is one which has radio coverage from only one communications satellite 10. A second type of area 20 is an area where there is radio coverage from more than one communications satellite 10. Finally, a third type of area 22 receives radio coverage from none of the communications satellites 10 in the orbit 12 shown.

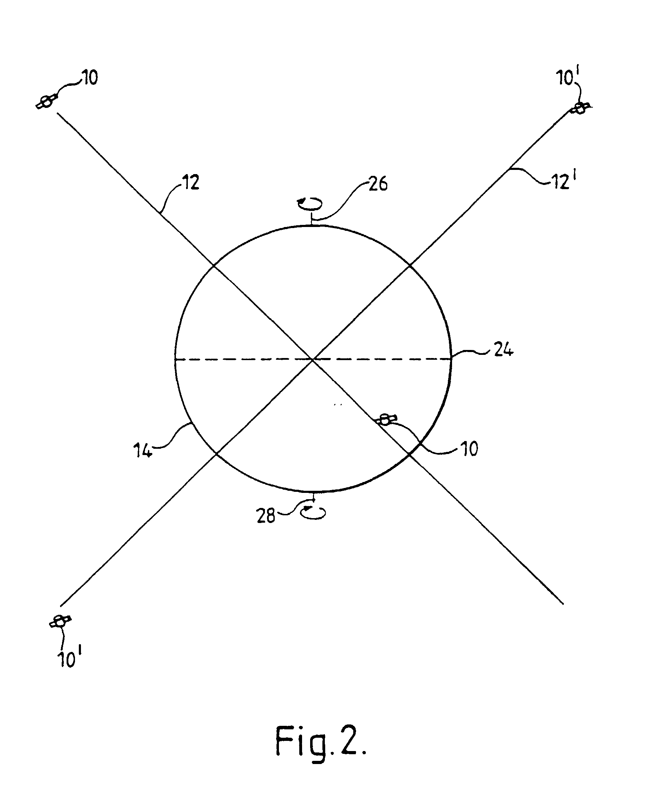

Figure 2 illustrates how the communications satellites 10 are disposed in orthogonal orbital planes.

The first orbit 12 of figure 1 is supplemented by a second orbit 12' having communications satellites 10 disposed there about in a similar manner to that shown in figure 1. The orbits 12' are orthogonal to one another, each being inclined at 45 degrees to the equator 24 and having planes which are orthogonal (at 90 degrees ) to each other.

In the example shown, the communications satellites 10 orbit above the surface of the earth 14 at an altitude of 10 355km. Those skilled in the art will be aware that other orbital heights and numbers of communications satellites 10 may be used in each orbit 12, 12'. This configuration is preferred because the example provides global radio coverage of the earth 14, even to the north 26 and south 28 poles, with a minimum number of communications satellites 10. In particular, the orthogonality of the orbits ensures that the communications satellites 10 of the second orbit 12' provides radio coverage for the third types of area 22 of no radio coverage for the communications satellites in the first orbit 12, and the communications satellites 10 in the first orbit 12 provide radio coverage for those areas 22 of the third type where the communications satellites 10 of the second orbit 12' provide no radio coverage. By such an arrangement, it is ensured that every point, on the surface of the earth 14, has, at least, one communications satellite 10 10', visible at all times.

It will become clear that, although the two orbits 12, 12' are here shown to be of the same radius, the embodiment of the invention as hereinbefore and hereinafter described will function with orbits 12, 12' of different radii. Equally, there may be more than two orbits 12, 12 '. So far as the embodiment of the present invention is concerned, the only requirement is that every part of the surface of the earth 14 is in receipt of radio coverage from at least one communications satellite 10 at all times.

The global coverage herinbefore described is not essential to the present invention. Other systems where coverage is not global, or even those employing geostationary satellites, can be the subject of the invention.

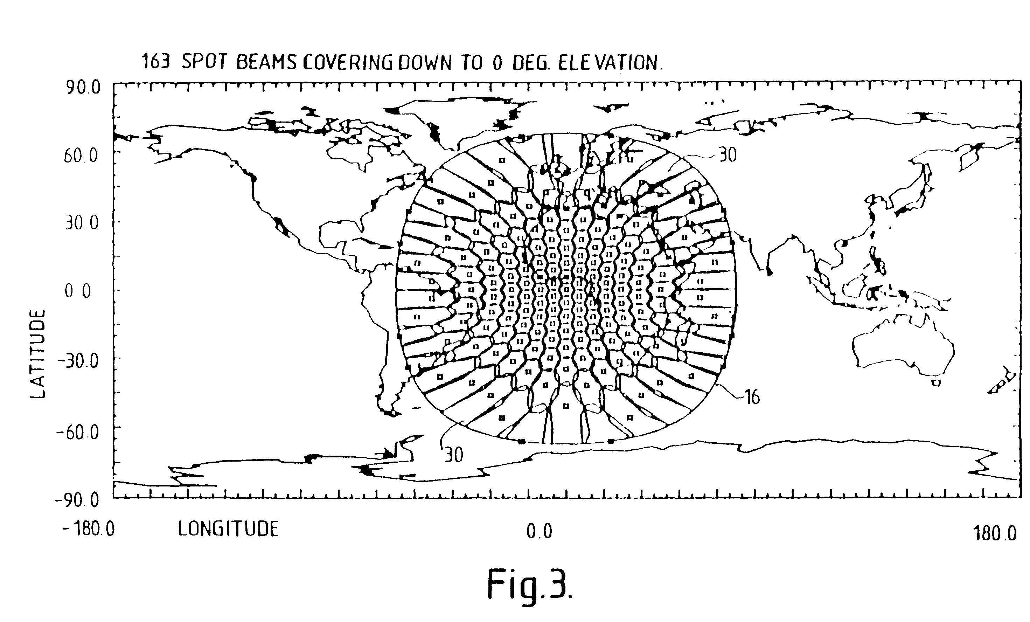

Figure 3 shows the structure of the cone 16 of radio coverage provided by each communications satellite 10. For convenience, the radio coverage cone 16 is shown centred, on a map of the earth, at latitude 0 degrees at longitude 0 degrees. The cone 16 of radio coverage is divided into a plurality of spot beams 30, by means of a corresponding plurality of directional antennae on the communications satellite 10. The communications satellite 10 is intended for mobile radio telephone communications and each of the spot beams 30 corresponds, roughly, to the equivalent of a cell in a cellular radio telephone network. In figure 3, the cone of radio coverage 16 is distorted due to the geometry of the map of the earth's surface provided. Figure 3 also shows the extent of interaction of the cone 16 of radio coverage down to the edges of the cone 16 being tangential to the earth's surface, that is, to the point where the cone 16 represents a horizontal incidence at its edges, with the surface of the earth. By contrast, figure 1 shows the cone 16 at a minimum of 10 degrees elevation to the surface of the earth.

It is to be observed, that because of the curvature of the earth, the spot beams 30 are of near uniform, slightly overlapping circular shape at the centre whereas, at the edges, the oblique incidences of the spot beams 30 onto the surface of the earth 14 causes considerable distortion of shape.

Figure 3 illustrates the great size of even a smaller, central spot beam 30, which has a diameter around 500 Km. To restrict access to an entire spot beam would be to deny coverage to a very large are of the surface of the earth.

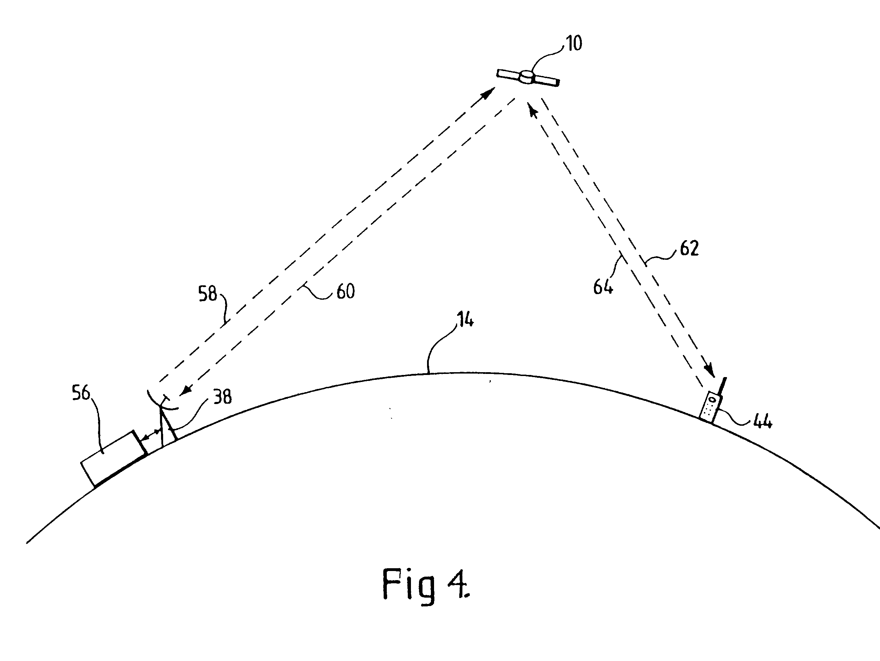

Figure 4 is a schematic view of the general situation where an earth station 38 talks to a user terminal 44 or via the communications satellite 10.

The earth station 38 further comprises an earth station controller 56 which controls the activity of the earth station 38. The earth station 38 is located at a first point on the surface of the earth 14 and the terminal 44 may be at any other point on the surface of the earth within range of the communications satellite 10 when the communications satellite 10 is in range of the earth station 38.

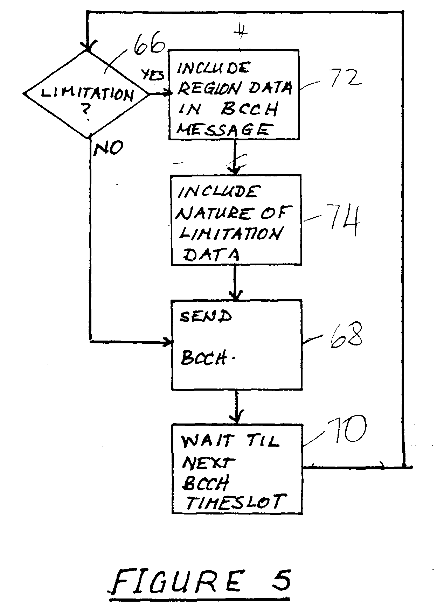

The earth station 38 communicates with the communications satellite 10 via an uplink radio link 58, via the uplink antenna 40 of figure 5, using frequencies in the band 5150 to 5250 megahertz. The earth station 38 receives signals from the communications satellite 10 via the downlink antenna 36 of figure 5 on a downlink radio link 60 using signals in the frequency range 6975 to 7075 megahertz.

The terminal 44 receives signals from the communications satellite 10 via a terminal downlink 62 using frequencies in the range 2170 to 2200 megahertz. The terminal 44 sends messages and signals to the communications satellite 10 via a terminal uplink 64 operating in the frequency band 1980 to 2010 megahertz. These frequencies are merely exemplary and those skilled in the art will be aware from the following description, that the invention could be practised using numerous other frequencies for the uplinks and downlinks.

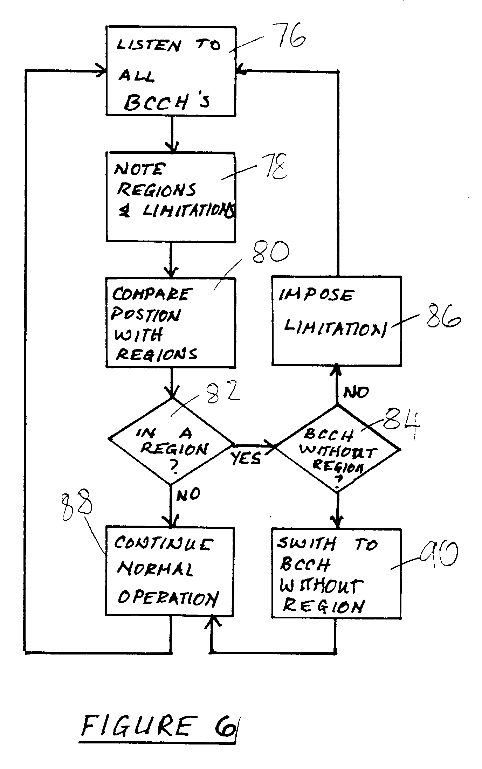

Implicit in figure 6, but not specifically shown, is the fact that communications satellite 10 contains its own precise oscillator, conveniently in the form of a crystal oscillator, which the communications satellite 10 uses for converting the frequencies of incoming and outgoing signals and for use as a frequency reference when synthesising frequencies. Likewise, the terminal 44 contains its own internal synthesised oscillator, working from a master oscillator, preferable a crystal oscillator, for converting frequencies of incoming signals and synthesising the frequencies of outgoing signals.

Equally, the earth station 38 and the earth station controller 56 between them contain, or have access to, extremely precise frequency references and time references. These references may actually be contained within the earth station 38 and the earth station controller 56, or may be derived from elsewhere via a land line or other service.

The exact location, on the surface of the earth 14, of the earth station 38, is known with great precision. Likewise, the parameters or the orbit 12 12' of the communications satellite 10 and its position in that orbit, at any instant, are also known with great precision. The uncertain element, which is the purpose of the present invention to resolve, is the position of the terminal 44 on the surface of the earth 14.

Not previously mentioned, is the fact that the terminal 44 transmits on the terminal uplink 64 to the subscriber antenna 42 and similarly receives on the terminal downlink link 62 from the subscriber antenna 42. The communications satellite 10 may only be in communication with one earth station 38 at a time, though the satellite 10 may be able to "see" up to four earth stations 38 at any one time, but may be in communication with a great many terminals 44. Each terminal will be in one particular spot beam 30 of the plurality of spot beams shown in figure 3.

The signals exchanged between the earth station 38 and the communications satellite 10, in common with the signals exchange between the terminal 44 and the communications satellite 10, all enjoy a propagation delay and a frequency shift, due to the motion of the communications satellite 10 relative to the earth station 38 and to the terminal 44 caused by the Doppler effect. The one embodiment of the invention requires that the earth station 38 should be able to measure the position of the user terminal 44, on the surface of the earth 14, and inform the user terminal of its location. One way this can be achieved is by employing the Doppler shift in frequencies. due to the motion of the communications satellite 10, and measurement of the propagation delay, to determine the position of the terminal 44 on the surface of the earth 14.

Propagation delay is measured between the earth station 38 and the terminal 44 to establish the propagation delay between the terminal and the communications satellite 10. The earth station 38 sends out a signal on the uplink radio link 58 to the communications satellite 10 which is, in turn, sent to the terminal 44 via the terminal downlink 62. Upon receipt of the signal from the earth station 38, the terminal waits for a predetermined period and then sends its own message, via the terminal uplink 64 and the downlink radio link 60, back to the earth station 38. The earth station controller 56 notes the elapse of time from the instant that the earth station 38 began to transmit the message on the uplink radio link 58 and the instant when the earth station 38 began to receive the response message from the terminal 44 from the downlink radio link 60. The earth station controller 56 knows the propagation delay times for signals, through the communications satellite 10, from the uplink radio link 58 onto the terminal downlink 62 and, correspondingly, the propagation delay through the communications satellite 10 between the terminal uplink 64 and the downlink radio link 60. Equally, the earth station controller 56 knows, with precision, the predetermined elapsed time employed by the terminal 44 before it responds to the received message from the earth station 38. These propagation delays and the predetermined delay of the terminal 44 are subtracted, by the earth station controller 56, from the overall elapsed time to determine the actual propagation delay of the radio wave via the various links 58, 60, 62, 64 in the return journey of the message from and to the earth station 38. The radio wave propagates always at the speed of light, which is constant. Because the position of the earth station 38, on the surface of the earth, is precisely known, and because the position of the communications satellite 10 in its orbit 12 12' is also precisely known, the sum of the propagation delays on the uplink radio link 58 and the downlink radio link 60 can be precisely calculated. The earth station controller 56 is already aware of the over all elapsed time for the propagation of the message along the radio paths 58, 60, 62. 64. By subtracting the calculated delay on the radio path 58 60 between the earth station 38 and the communications satellite 10 from the overall propagation delay, the propagation delay between the terminal 44 and the communications satellite 10 may, precisely, be measured. This means that. since the propagation is entirely at the speed of light, the linear distance between the communications satellite 10 and the terminal 44 is known. According to the propagation delay, the terminal may exist on any point of a spherical surface centred on the communications satellite 10. Because the spherical surface intersects the surface of the earth 14, and the terminal 44 is on the surface of the earth, the location of the terminal 44 may be inferred as being on the line intersection of the spherical surface of the earth 14 and the sphere of measured distance centred on the communications satellite 10.

Equally, by measuring the Doppler frequency shift, first between the earth station 38 and the satellite 10., and then between the satellite 10 and the user terminal 44, it is possible to locate the user terminal on the intersect of a cone of constant Doppler shift with the surface of the earth. By making the intersection of the circular intersects of the sphere of constant delay, measure by propagation delay, with the intersect of the cone of constant Doppler shift, the position of the user terminal 44 can be found.

Another way to achieve the location of the user terminal 44 by the earth station 38 is to employ propagation delay measurements with two satellites 10. The intersects of the earth-surface circles, being the intersects of two constant-propagation-delay spheres around the satellite, define the location of the satellite.

In another embodiment of the invention, the user terminal 38 itself employs a self-location system, such as GPS, automatically to know its position on the surface of the earth.

It is not an essential element of the present invention exactly how the position of the user terminal 38 is found and made known to the user terminal. It is merely necessary to be able to find where, on the surface of the earth 14, the user terminal 38 is located. Those, skilled in the art, will be aware of other means whereby the objective can be achieved, and which are equally applicable to the present invention.

In general, the user terminal 44 already knows its position. Whenever a user terminal 44 registers with an earth station 38, the earth station 38 takes the above described measures to find where the user terminal 38 is located on the surface of the earth 14. The earth station then informs the user terminal 44, via a short data message, of the co-ordinates of its location. Latitude and longitude is preferred, but any system is equally applicable, provided the system is capable of interpretation by the user terminal 44. On each occasion when a user terminal 44 seeks access to the earth station 38, such as for the origination of a call, or for periodic location updating, the user terminal 44 will also be informed of its location. In those embodiments where the user terminal 44 has self-knowledge of its position, such as would be gained by use of a GPS system. or any other earth surface position determination system (for example, LORAN), there is, of course no need for the earth station 38 to measure the position of the user terminal 44 nor for the earth station 38 to communicate the position to the user terminal 44.

In the following description, it is to be understood that a user terminal 44, in an embodiment of the invention where the earth station 38 measures the position of the user terminal 44, when first switched on, and potentially in a region of limitation, will attempt to access the earth station 38 just once to be updated on its position, and will then revert to a limitation of operation if in a region of limitation.

Figure 5 is a flowchart illustrating the behaviour of the earth station 38 when controlling the individual user terminals 44. It is, essentially a housekeeping loop whereby the earth station 38 keeps a continual broadcast update to the user terminals 44.

Periodically, and at known timeslots and frequencies, the earth station 38 sends broadcast messages, to all accessible user terminals 44, on a Broadcast Message Channel (BCCH). The user terminals 44 know the frequencies and timeslots, and are thereby able to receive the BCCH messages. It does not matter that the BCCH is sent in this way. It is only essential, to the present invention, that the user terminals 44 are able to receive broadcast information from the earth station 38.

In the preferred embodiment, each spot beam 30 is provided with its own, independent BCCH. The satellite 10 thus provides a separate BCCH for each spot beam 30. This is not essential to the present invention. It is simply necessary that the earth station 38, via the satellite, can provide broadcast information to the user terminals 44.

It is to be recollected that there are regions 20 of the earth 14 covered by more than one satellite 10 10'. In the preferred embodiment of the invention, points on the surface of the earth 14 can be accessible to up to four satellites 10 10'. In this instance, in the preferred embodiment, the individual user terminal 44 can find itself in up to four spot beams 30 at the same time. Each spot beam 30, or satellite (if individual spot beam BCCH's are not provided) will carry its own BCCH. The individual user terminal 44, in the preferred embodiment, is at liberty to monitor any BCCH from whatever source it can hear. Thus, a user terminal 44 can be in a position to monitor the BCCH from just one source, or from an instant plurality of sources. In the preferred embodiment, a BCCH will be monitored if it exhibits a sufficient radio signal strength for the potential establishment of communications.

Commencing with a first test, the earth station 38 determines whether or not there is a requirement for a limitation of operation within any region at that moment covered by an individual spot beam 30. Some limitations will be permanent, as in the case of prohibition of user terminal 44 operation close to radio astronomical or military facilities. Such limitation regions will be stored permanently within the earth station 38. Other limitations will be as a result of the operation of the ground segment (all earth stations 38 and associated land lines to each other and to PSTN's etc), such as localised traffic congestion or unavailability of terrestrial line capacity, and will be generated by the earth station 38 or other earth stations 38 in the system. Other limitations will be from an outside source, such as emergency or military services requiring freedom of communication, and will be communicated to the earth station via the terrestrial telephone or date network.

In the event that there is no limitation in any region, the first test 66 passes control to a first operation 68 where the earth station, via the satellite 10, sends a normal BCCH (containing other operational information) to all user terminals 44 in the particular spot beam 30.

Control then passes to a second operation 70 where, while conducting all of the other operational activities required of it, the earth station 38 waits until the next timeslot when it is due to send a BCCH message, and then returns control to the first test 66.

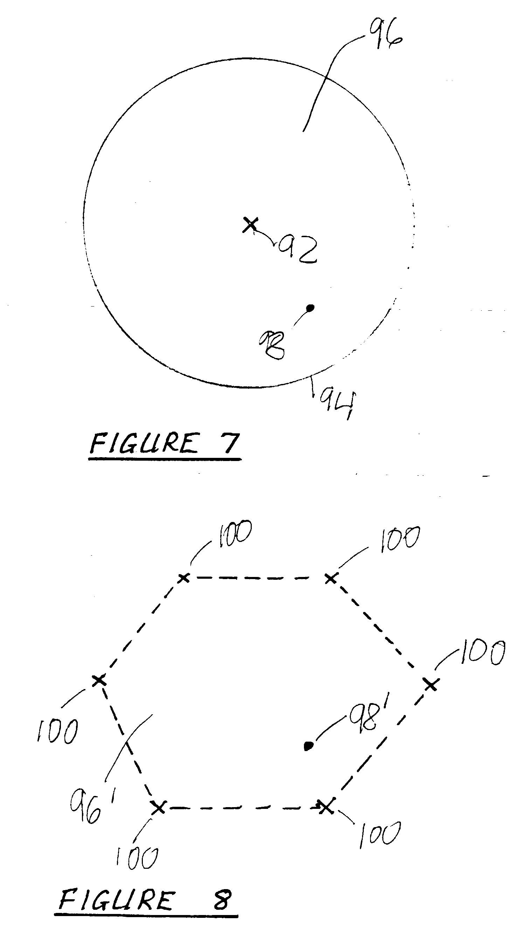

If the first test detects that a limitation of service is required in some region, the earth station 38 passes control to a third operation 72 where the geographical data relating to regions of limitation to operation is assembled into the BCCH message. The nature of the geographical information is later described with reference to figures 7 and 8. Control then passes to where a data message indicating the nature of the limitation is also assembled into the BCCH message. The fourth operation 74 then passes control to the first operation 68 where the BCCH message, with indication of regions and limitations. is sent to be received by all user terminals 44 within the particular spot beam 30.

Where a plurality of regions of limited operation are indicated in the BCCH message, the nature of the limitation need not be the same for all regions. One region may require that the user terminal 44 remains silent until it is out of the region. Another region may require some or all of certain activities to be curtailed. An exemplary, but non exhaustive list of limitations, includes:
a) The earth station 38 indicates a timer value. This indication can be in the BCCH, or in response to a location update, or from any other exchange of signals. All that matters is that the user terminal 44 should know the timer value. In response, if in that region, the user terminal 44 starts a timer and waits for the elapse of the timer value before again attempting to access the earth station 38. The limitation can be total or may allow such activities as periodic re-registration or location updating.
b) The earth station 38 indicates that the user terminal 44 must cease all operation indefinitely.
c) The earth station 38 indicates that the user terminal 44 must cease any location updating attempts.
d) The earth station 38 indicates that the user terminal 44 must cease any registration or re-registration activities.
e) The earth station 38 indicates that the user terminal 44 may not initiate a call.

This list is not exhaustive, and other useful limitations can be included within the invention.

In order to remove or change a limitation, it is simply necessary for the earth station 38 to remove or alter the appropriate regional or limitation information in the BCCH message.

Figure 6 illustrates the activity and response of an individual user terminal 44 when in receipt of one or more BCCH messages.

In a fifth operation 76, the user terminal 44 listens to all adequately strong BCCH messages it can hear. A sixth operation 78 then captures and interprets all data relating to regions of limitation of operation, and the nature of the limitation in each region. A seventh operation 80 then uses knowledge of the current position of the user terminal 44 to calculate whether or not the user terminal 44 is in a region of limitation.

If a second test 82 detects that the user terminal 44, as currently configured (that is, registered with a particular, selected spot beam 30), control passes to a third test 84 which looks to see if another, acceptably strong, BCCH message indicates that the user terminal 44 is not in a region of limitation to operation. If none can be found, control passes to an eighth operation 86 where the limitation is imposed and control passed back to the fifth operation 76.

If the second test 82 detects that the user terminal 44 is not, as currently configured, in a region of limitation, control passes to a ninth operation 88 where the user terminal 44 carries on without limitation, control eventually being passed back to the fifth operation 76

If the third test 86 can find a BCCH message of sufficient strength for communications where there is no indication of a region of limitation wherein the user terminal 44 is currently located, control passes to a tenth operation 90 where the user terminal 44 establishes itself with the spot beam 30 with the free acceptable BCCH message and passes control to the ninth operation 88.

It is to be understood that regions of limitation to operation can overlap and, in that event, if the user terminal 44 is in an overlap area, the combination of limitations must be observed.

Figure 7 shows one way in which the earth station 38 can indicate the geographical data to define a region of limitation of service.

The earth station 38 first defines the co-ordinates of a point 92 and then defines a radius 94 around the point 92 . The region 96 of limitation to operation is then defined as all points within the radius 94 and if the actual position 96 of the user terminal 44 is within the region 96, as determined by the seventh operation 80 and the second test 82.

Figure 8 shows another way in which the earth station defines a region of limitation of operation.

The earth station 38 indicates the co-ordinates of the vertices 100 of a polygon. The user terminal 44, in the seventh operation 80, then defines the region of limitation of operation 96' as the interior of the polygon, as defined by its sides (shown in broken line) being straight lines between adjacent vertices 100. If the actual position 98'of the user terminal 44 is within the region 96', the appropriate limitation is imposed or another BCCH sought.

In the example of figure 8, a hexagon is shown. The present invention encompasses all polygons, regular or irregular, and includes triangles, squares, pentagons, heptagons, nonagons, etc.

## Claims

1. A satellite communications system comprising a user terminal and a ground segment in communications with said user terminal via a communications satellite, said system being operative to measure the position, on the surface of the earth. of said user terminal, said system being operative to determine if said measured position is within a region of the surface of the earth wherefrom operation is limited. and said user terminal and said ground system being co-operative to limit operation of said user terminal if said user terminal is within said region.

2. A system, according to claim 1, wherein said ground segment is operative to indicate said region by communicating to said user terminal the location on the surface of the earth of said user terminal, the location of a point on the surface of the earth and the radius of a circle having said point as its centre, said user terminal being responsive thereto to calculate if said user terminal is within said circle and to limit operation if said user terminal is within said circle.

3. A system, according to claim 1 or 2, wherein said satellite is one of a plurality of satellites, wherein each of said plurality of satellites provides a plurality of spot beams to provide radio coverage on the surface of the earth, and wherein each spot beam provides a broadcast message for reception by said user terminal, said user terminal being operative to receive said broadcast message from all spot beams said user terminal can, at any instant, receive, and said user terminal being operative to attempt unlimited operation with any receivable spot beam which does not provide, in said broadcast message, indication of a region of limited operation wherein said user terminal is located.

4. A system, according to claim 1, 2 or 3, wherein said ground segment is operative to communicate to said user terminal a timer value, said user terminal being responsive thereto to start a timer and to limit operation until said timer value has elapsed.

5. A system, according to claim 1 or claim 2, wherein said user terminal comprises independent means for determining the position of said user terminal on the surface of the earth, said user terminal imposing said limit to operation until said user terminal has moved outside said region.

6. A system according to claim 5, when not dependent upon claim 2, wherein said ground segment is operative to define said region by indicating to said user terminal the co-ordinates, on the surface of the earth, of a polygon, said region being defined by the sides of said polygon.

7. A system, according to any of the preceding claims, wherein said limit to operation includes a prohibition from any operation by said user terminal.

8. A system, according to claims 1 to 7, wherein said limit to operation includes a prohibition from location updating by said user terminal.

9. A system, according to claims 1 to 7, wherein said limit to operation includes a prohibition from registration, by said user terminal, with said ground segment.

10. A system, according to claims 1 to 7. wherein said limit to operation includes a prohibition on said user terminal from initiating a call.

11. A system. according to any of the preceding claims, wherein said ground segment is operative to communicate to said user terminal the nature of said limit to operation and said user terminal is responsive thereto to impose on itself the indicated limit.

12. A user terminal for user in a satellite communications system comprising said user terminal and a ground segment in communications with said user terminal via a communications satellite, said system being operative to measure the position, on the surface of the earth, of said user terminal, said system being operative to determine if said measured position is within a region of the surface of the earth wherefrom operation is limited, and said user terminal and said ground segment being co-operative to limit operation of said user terminal if said user terminal is within said region.

13. A user terminal, according to claim 12, for use in a system wherein said ground segment is operative to indicate said region by communicating to said user terminal the location on the surface of the earth of said user terminal, the location of a point on the surface of the earth and the radius of a circle having said point as its centre, said user terminal being responsive thereto to calculate if said user terminal is within said circle and to limit operation if said user terminal is within said circle.

14. A user terminal, according to claim 12 or 13, for use in a system wherein wherein said satellite is one of a plurality of satellites, wherein each of said plurality of satellites provides a plurality of spot beams to provide radio coverage on the surface of the earth, and wherein each spot beam provides a broadcast message for reception by said user terminal, said user terminal being operative to receive said broadcast message from all spot beams said user terminal can, at any instant, receive, and said user terminal being operative to attempt unlimited operation with any receivable spot beam which does not provide, in said broadcast message, indication of a region of limited operation wherein said user terminal is located.

15. A user terminal, according to claim 12, 13 or 14, for use in a system wherein said ground segment is operative to communicate to said user terminal a timer value, said user terminal being responsive thereto to start a timer and to limit operation until said timer value has elapsed.

16. A user terminal, according to claim 12 or claim 13, comprising independent means for determining the position of said user terminal on the surface of the earth, said user terminal imposing said limit to operation until said user terminal has moved outside said region.

17. A system according to claim 16, when not dependent upon claim 14, for user in a system wherein said ground segment is operative to define said region by indicating to said user terminal the co-ordinates, on the surface of the earth, of a polygon, said region being defined by the sides of said polygon.

18. A user terminal, according to any of claims 12 to 17, wherein said limit to operation includes a prohibition from any operation by said user terminal.

19. A user terminal, according to claims 12 to 17, wherein said limit to operation includes a prohibition from location updating by said user terminal.

20. A user terminal, according to claims 12 to 17, wherein said limit to operation includes a prohibition from registration, by said user terminal, with said ground segment.

21. A user terminal, according to claims 12 to 17, wherein said limit to operation includes a prohibition on said user terminal from initiating a call.

22. A user terminal, according to any of claims 12 to 21, for user in a system wherein said ground segment is operative to communicate to said user terminal the nature of said limit to operation, said user terminal being responsive thereto to impose on itself the indicated limit.

23. A method for use in a satellite communications system comprising a user terminal and a ground segment in communications with said user terminal via a communications satellite, said method comprising the steps of: said system measuring the position, on the surface of the earth, of said user terminal; said system determining if said measured position is within a region of the surface of the earth wherefrom operation is limited; and said user terminal and said ground segment co-operating to limit operation of said user terminal during the time that said user terminal is within said region.

24. A method, according to claim 23, including the steps of: said ground segment indicating said region by communicating to said user terminal the location on the surface of the earth of said user terminal, the location of a point on the surface of the earth and the radius of a circle having said point as its centre; said user terminal calculating if said user terminal is within said circle; and said user terminal limiting operation if said user terminal is within said circle.

25. A method, according to claim 23 or 24, for use in a system wherein said satellite is one of a plurality of satellites, wherein each of said plurality of satellites provides a plurality of spot beams to provide radio coverage on the surface of the earth, and wherein each spot beam provides a broadcast message for reception by said user terminal, said method including the steps of; said user terminal receiving said broadcast message from all spot beams said user terminal can, at any instant, receive; and said user terminal attempting unlimited operation with any receivable spot beam which does not provide, in said broadcast message, indication of a region of limited operation wherein said user terminal is located.

26. A method, according to claim 23, 24 or 25, including the steps of: said ground segment communicating to said user terminal a timer value; said user terminal starting a timer; and said user terminal imposing said limit to operation until said timer value has elapsed.

27. A method, according to claim 23 or claim 24, including the steps of: providing said user terminal with independent means for determining the position of said user terminal on the surface of the earth; and said user terminal imposing said limit to operation until said user terminal has moved outside said region.

28. A method according to claim 27, when not dependent upon claim 26, including the step of said ground segment defining said region by indicating to said user terminal the co-ordinates, on the surface of the earth, of a polygon, said region being defined by the sides of said polygon.

29. A method, according to any of claims 23 to 28, wherein said limit to operation includes a prohibition from any operation by said user terminal.

30. A method, according to claims 23 to 29, wherein said limit to operation includes a prohibition from location updating by said user terminal.

31. A method, according to claims 23 to 29, wherein said limit to operation includes a prohibition from registration, by said user terminal, with said ground segment.

32. A method, according to claims 23 to 29, wherein said limit to operation includes a prohibition on said user terminal from initiating a call.

33. A method. according to claims 23 to 32, including the steps of said ground segment communicating to said user terminal the nature of said limit to operation and said user terminal is responding thereto to impose on itself the indicated limit.
